# EUROPEAN PATENT APPLICATION

(11) **EP 3 905 164 A1**
(43) Date of publication of application: **03.11.2021**
(21) Application number: 20187978.0
(22) Date of filing: 27.07.2020
(51) Int. Cl.: G06Q 20/06

(54) **METHOD AND SYSTEM FOR ISSUING AND MANAGING CURRENCY**

(30) Priority: 27.04.2020 CN 202010341910
(71) Applicant: Ea, Sunny, Hong Kong (CN)
(72) Inventor: Ea, Sunny, Hong Kong (CN)
(74) Representative: Swindell & Pearson Limited

(57) **Abstract**

The present invention relates to a method for issuing and managing a currency, which comprises the following steps: selecting a planet corresponding to a currency; dividing a surface area of the planet equally according to a determined unit area; determining a total amount of currency issuance according to the number of divided unit areas of the planet; anchoring each unit area of the planet, and performing currency issuance in a manner that each unit area corresponds to one currency issuance unit. The total amount of currency is linked to the natural resources of a planet, thereby putting an end to an unreasonable and unfair phenomenon on the arbitrary printing of physical currency without restraint or regulation. Meanwhile, the currency keeps its value and increases its value with the change in natural resources, and has liquidity and high collection value.

## Description

### TECHNICAL FIELD

The present invention relates to a method and system for issuing and managing a currency, and in particular, to a method and system for issuing and managing a currency corresponding to a surface area of a planet.

### BACKGROUND

A currency is a consensus of people on a medium to improve efficiency of transactions. The attribute of currency has evolved with the rise and fall of an economic system. The rise of the gift economy gave rise to goods currency; the rise of the commodity economy gave rise to metal currency; the rise of timocracy economy gave rise to metal substituted currency and credit currency; and the rise of the sharing economy gave rise to super-sovereign currency. Generally, the value of the currency is determined by the transaction efficiency in economic activities. At present, the world is still in a market system dominated by the timocracy economy, with the highest efficiency of credit currency.

A currency includes both a currency in circulation as well as various kinds of saving deposits. In the modern economy field, only a small portion of currency is embodied in the real currency, namely, the practically used paper currency or coins in circulation (for example, the gold and silver standard currency used in the early days, or the "paper currency" commonly used today). After the popularity of accounting systems and computer networks, most transactions are made by checks or electronic currencies (third-party payments or credit cards).

A currency area refers to a country or region that circulates and uses a single currency. Generally, each country uses only one currency. The currency is issued and controlled by the central bank institution of the authority. The central bank has the power to determine the face value and the amount of issuance of the domestic currency but has no power to determine the market purchasing power of the currency. Multiple countries can also use the same currency, such as the European dollar commonly used in European Union countries, and the West African franc used in Economic Community of West African states.

The preparation system of traditional currency issuance is designed to restrict the scale of currency issuance and maintain currency credit. Currency issuers are required to use a certain metal or asset as preparation for issuance when issuing a currency. Under the metal currency system, precious metals prescribed by law are used as the preparation for currency issuance. Under the modern credit currency system, the contents of preparation systems for currency issuance in various countries are relatively complex, which generally include cash preparation and securities preparation. Thus, the issuance preparation of traditional currency is based on a certain metal or credit, which has no corresponding relationship with the amount of actual resources in the world. The currency is arbitrarily printed in some currency areas without restraint or regulation, which disturbs the entire currency market and causes an unreasonable and unfair phenomenon. Moreover, the issuance preparation basing on a certain metal or a credit does not reflect the rise or fall in population or the changes in global wealth.

At present, the world has entered the Internet era, a new type of currency, namely a digital currency, appears. The digital currency is a decentralized blockchain technology. As a kind of typical digital currency, bitcoin is a blockchain payment system and a virtual pricing tool. Because the production and transfer of bitcoin is controlled by cryptographic technology, there is no central issuance authority, it could not be arbitrarily issued. The trading of the bitcoin runs in the global network, which has special confidentiality. Additionally, third-party financial institutions is unnecessary, user could directly exchange goods and services on the Internet at anytime and anywhere using encrypted wallet software in personal computers and smart phones, without passing through any intermediaries, such as bank, credit card and online payment companies. As a result, the digital currency is used more and more widely, but also becomes a medium for illegal transactions.

As an accounting system, bitcoin does not rely on central institutions to issue new money and maintain transactions. Instead, it is completed by the blockchain. As a data block composed of transaction records connected in series by encryption technology, it is possible to attack the bitcoin network only when the attacker's computing power exceeds 50% of the whole network. Double spending is mainly prevented, where a piece of currency has been spent more than once, and confirmation of new transactions is impeded. Transaction records are kept by all nodes, and miner records collect and verify transaction information.

As a unit of account, the smallest unit of bitcoin is 0.00000001 (one hundred millionth) bitcoin, known as "1 satoshi". If necessary, it can be modified to a smaller unit by modifying the protocol, to ensure the circulation is convenient. The reward of for adding a block will be halved every 210,000 blocks, about every four years. The latest drop in half happened in July 9, 2016, and the sum of such convergence of geometric sequence is necessarily to be limited, there will be no new bitcoin produced by 2140, finally, the sum of bitcoins in circulation will ever be slightly less than 21 million. Until March 2018, there are about 17 million bitcoins in supply, and the actual circulation quantity will be further reduced due to key loss and other factors.

As a result, the circulation of bitcoin is essentially a fixed value, regardless of the amount of actual resources in the world. In addition, regardless of the property that currencies should have adjusted the reasonable ratio of supply and demand, bitcoin gradually becomes collection and investments with increasing value, and in fact loses the property of the purchase and circulation of currency.

### SUMMARY

The problem to be solved by the present invention is to provide a method and system for issuing and managing a currency, to make a total amount of the currency correspond to a certain resource, and put an end to an unreasonable and unfair phenomenon on arbitrarily printing the currency without restraint or regulation. Meanwhile, the currency corresponds to corresponding natural resources, has investment and collection values, and can achieve the effect of preserving and increasing the value according to different preferences of people; and thus the currency not only has a reasonable total amount of currency but also can be dynamically circulated and traded.

The purpose of the present invention is to provide a home currency for other digital currencies, which acts as a reference standard for the value of other digital currencies.

A method for issuing and managing a currency according to the present invention comprises the following steps: selecting a planet corresponding to a currency S10; dividing a surface area of the planet equally according to a determined unit area S20; determining a total amount of currency issuance according to the number of divided unit areas of the planet S30; anchoring each unit area of the planet S40; and performing currency issuance in a manner that each unit area corresponds to one currency issuance unit S50.

The planet is the earth, the unit area is one square meter, a surface area of the earth is 510.1 trillion square meters, and a total amount of currency issuance is 510.1 trillion coins.

The currency is a physical currency, an electronic currency, or both a physical currency and an electronic currency.

Each currency issuance unit corresponds to a plain code, and the plain code is longitude and latitude coordinates of the unit area of the earth corresponding to the currency issuance unit.

The currency is classified into a water currency, a gold currency, an earth currency, a fire currency, and a wood currency according to a state of the unit area of the earth corresponding to each currency issuance unit.

In addition, the currency also corresponds to a state of its underground resource.

The present invention also provides a system for issuing and managing a currency, the system comprises an issuing authority, which selects a planet corresponding to a currency; divides a surface area of the planet equally according to a determined unit area; determines a total amount of currency issuance according to the number of divided unit areas of the planet; anchors each unit area of the planet, and performs currency issuance in a manner that each unit area corresponds to one currency issuance unit.

The planet is the earth, the unit area is one square meter, a surface area of the earth is 510.1 trillion square meters, and a total amount of currency issuance is 510.1 trillion coins.

The currency is a physical currency, an electronic currency, or both a physical currency and an electronic currency, and the system further comprises a trading authority that provides a trading platform to provide a service for a transaction between currency holders.

Each currency issuance unit corresponds to a plain code, and the plain code is longitude and latitude coordinates of the unit area of the earth corresponding to the currency issuance unit.

The currency comprises a water currency, a gold currency, an earth currency, a fire currency, and a wood currency, and each type of currency is determined according to a state of the unit area of the earth corresponding to each currency issuance unit.

According to the method and system for issuing and managing the currency provided by the present invention, currency issuance may be corresponding to actual natural resources, and the value of the currency can be accurately quantified to serve as a reference basis for the value of other currencies. The currency not only can be used as a physical currency for face-to-face transactions to become investment products and collectibles with appreciation potential, but also can be used as a digital currency for online transactions to complete circulation of the currency.

### BRIEF DESCRIPTION OF DRAWING

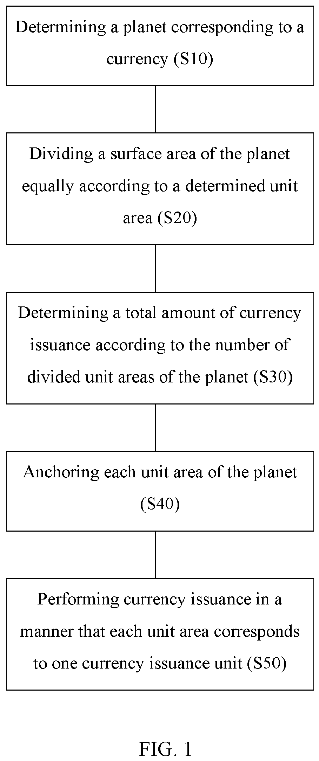

FIG.1 shows main steps of a method for issuing and managing a currency provided by the present invention.

### DESCRIPTION OF EMBODIMENTS

FIG.1 shows main steps of a method for issuing and managing a currency of the present invention.

According to the method for issuing and managing the currency of the present invention, said currency can be a physical currency, a virtual encrypted digital currency, or both a physical currency and a digital currency, which can be circulated globally, and the name of the currency is "Worldmoney" ("WM" for short, hereinafter referred to as WM currency). The currency has the attribute of a normal currency, a basic unit of the currency is "dollar" (DOLLAR), and one currency unit (coin) is 1 DOLLAR.

According to the method for issuing and managing the currency of the present invention, a total amount of the currency corresponds to the number of evenly divided unit areas of a certain planet and is linked up with the natural resources of the planet, which puts an end to an unreasonable and unfair phenomenon of arbitrary printing and issuance of physical currency without restraint or regulation.

As shown in FIG. 1, a method for issuing and managing a currency of the present invention includes the following steps: selecting a planet corresponding to a currency (S10); dividing a surface area of the planet equally according to a determined unit area (S20); determining a total amount of currency issuance according to the number of divided unit areas of the planet (S30); anchoring each unit area of the planet (S40); and performing currency issuance in a manner that each unit area corresponds to one currency issuance unit (S50).

The currency is linked up with natural resources, the planet corresponding to the currency can be selected, for example, the planet is the earth, and of course, other planets can also be selected. A unit area for dividing the surface area of the planet is determined, for example, the unit area is set to one square meter. Given that a surface area of the earth is 510.1 trillion square meters, it can be determined that the total amount of currency issuance of the WM (the earth) is 510.1 trillion coins if the selected planet is the earth and the unit area is one square meter.

The WM currency can be a physical currency and can be distributed to individuals in the form of distribution, exchange, rewards, etc. The WM currency is circulated in the same form as an ordinary physical currency, and the value of different commodities can be embodied through the WM currency, for example, the value of a product is 1 DOLLAR.

The WM currency can also be an electronic currency with the property of an electronically encrypted digital currency.

The WM currency can also be both a physical currency and an electronic currency with the electronic currency encrypted via digits and the physical currency used as certificate, and thus has properties of both the electronic currency and the physical currency. The WM currency can be issued and traded separately or in association.

Each WM currency issuance unit corresponds to a (set) plain code, and when the selected planet is the earth for currency issuance, each "DOLLAR" of the WM currency has a set of proprietary plain codes, i.e., 510.1 trillion coins of the WM currency each have their own plain codes and are different from each other, thus becoming the only identification for the plain code that distinguishes one DOLLAR from other DOLLARs.

The plain code can be a sequence number or a random number. Preferably, the plain code is represented by a coordinate value of the unit area of the earth corresponding to each DOLLAR. For example, each DOLLAR of the WM currency corresponds to one square meter of the surface area of the earth, and each square meter of the surface area of the earth is a square, which has four vertex coordinates with each vertex coordinate corresponding to a set of longitude and latitude values. Therefore, the four sets of longitude and latitude values formed by the four vertex coordinates are the proprietary plain code for this DOLLAR of the WM. In another embodiment, the plain code may also be the longitude and latitude coordinates of the center of the square (i.e., the intersection of two diagonal lines) of the unit area.

The plain code can also become a form of WM's physical certificate, which is marked on WM's physical currency. The plain code is the longitude and latitude coordinates of the unit area of the earth corresponding to the currency issuance unit.

For example, when the four vertex coordinates are used as plain codes, four sets of "east (west) longitude x degrees and north (south) latitude y degrees" can be marked on the physical currency as plain codes. The 510.1 trillion WM currencies with the earth as the corresponding planet each has its own 4 sets of numbers. One set or two sets of the same numbers may exist only in adjacent unit areas, and it is impossible to have 4 sets of plain codes with the same numbers. Each of plain codes is associated with latitude and longitude, but not exactly the same.

Of course, some algorithms may be used to unify four sets of numbers into one number or a combination of numbers and symbols so as to distinguish each WM currency. For example, when coordinates of a center point are used as plain codes, four sets of numbers can be simplified to one set of numbers. 510.1 trillion "east (west) longitude x degrees and north (south) latitude y degrees" are taken as plain codes and correspond to each DOLLAR of the WM currency, so that each DOLLAR of the WM currency has a unique plain code.

The currency is classified into a water currency, a gold currency, an earth currency, a fire currency, and a wood currency according to a state of the unit area of the earth corresponding to each currency issuance unit. For example, the states of the surface area of the earth of each unit area are different, and according to the properties of the states, the WM currency can be classified into: a water currency corresponding to surface parts of oceans, lakes, rivers, or the like, where water is a main state; a gold currency corresponding to surface parts of deserts and Gobi deserts, or the like; a wood currency corresponding to surface parts of forests and grasslands, or the like; an earth currency corresponding to surface parts of crops, and arable lands, or the like; and a fire currency corresponding to surface parts of cities, industrial buildings, or the like. Currencies are statutorily equivalent at the time of initial issuance, however, enthusiasts can voluntarily determine the exchange cost during exchange and collection. In addition, the currency also corresponds to a state of its underground resource, which can also be used as a reference of the value for currency transactions and exchanges.

The present invention also provides a system for issuing and managing a currency, the system includes an issuing authority, which selects a planet corresponding to a currency; divides a surface area of the planet equally according to a determined unit area; determines a total amount of currency issuance according to the number of divided unit areas of the planet; anchors each unit area of the planet, and performs currency issuance in a manner that each unit area corresponds to one currency issuance unit.

When the planet is selected as the earth, and the unit area is determined to be one square meter, a surface area of the earth is 510.1 trillion square meters, and the total amount of currency issuance issued by the issuance agency is 510.1 trillion coins.

Each currency issuance unit corresponds to a plain code, and the plain code is longitude and latitude coordinates of the unit area of the earth corresponding to the currency issuance unit.

The currency includes a water currency, a gold currency, an earth currency, a fire currency, and a wood currency, and each type of currency is determined according to a state of the unit area of the earth corresponding to each currency issuance unit.

The currency is a physical currency, an electronic currency, or both a physical currency and an electronic currency, and the system further includes a trading authority that provides a trading platform to provide a service for a transaction between currency holders. Holders of the WM currency determine a currency trading condition according to the value of the currency itself, the value of the unit area corresponding to the currency, and the individual's preference for plain codes.

The currency provided in the present invention has its unique resource characteristic. According to the fairness principle, the currency belongs to all people on the earth evenly, so it can correspond with the existing resources on the earth, to reflect the principle that natural resources should evenly belong to all people on the earth. According to the total amount of the currency issuance, all existing public resources on the earth are evenly distribute with each unit of the currency corresponding to each unit of said public resource. Each unit of the public resource is composed of attributes such as geographical location and state representation, thereby forming different types of currencies. Each sea has its own four sets of numbers of east longitude and north latitude, which will never be repeated. Each DOLLAR of the WM currency is marked with four sets of numbers of different four vertex coordinates or unique numbers of coordinates of a central point. The natural resources are combined with the WM currency and are shared by all human beings.

Of course, the selected planet can also be other planets such as the moon and Venus, as long as the WM is linked to the natural resources. The amount of issuance may also be determined by different unit areas to determine the total amount of issuance.

Each DOLLAR of the WM currency has the same initial value and the WM currency can be distributed to everyone by means of equal distribution, claim, subscription, or the like. An issuance fee may not be charged in the initial issuance however an issuing authority may set aside a certain proportion of currency as the cost of currency issuance. A currency trading authority may also corporate with a currency issuing authority to maintain operations by charging a certain service fee during currency trading.

The WM currency disclosed in the present invention, like other types of currency, can be obtained by means of wealth creation, market transaction, profit income, etc.

This WM currency can be the home currency of various digital currencies, just as the US dollar is the home currency of many physical currencies. There are more than 2,000 virtual currencies now, such as Bitcoin and Ether, value changes between them and pricing standards of which are still reflected in US dollars, rather than a recognized virtual digital currency. The currency disclosed in the present invention is linked to the total amount of natural resources and can be the home currency in the virtual currency. Since the WM currency disclosed in the present invention is a currency linked to natural resources in a virtual digital currency, the value of other virtual currencies can be calculated and determined by taking the WM currency value as a reference standard, and it is the most authoritative, scientific and fair manner that the currency is linked to natural resources. According to the daily buying and selling amount of each virtual currency, the rise and fall of various virtual digital currencies are determined by calculating, so as to determine the exchange rate among various currencies. Issuing, managing and trading authorities provide publication of exchange rates of the day for various virtual currencies, and provide various exchange services with charging the corresponding service fees. Issuing and managing authority can also provide a standard exchange rate to official legal or private-public virtual currency exchange offices and platforms.

The system for issuing and managing the currency also includes a trading platform, which provides a trading place for the holders of the currency. The holders of the currency conduct transactions according to the wishes of both parties and the ownership of the currency will be changed after the transactions completed.

For a person of ordinary skill in the art, any modifications or changes made in accordance with the above embodiments of the present invention shall be included in the protection scope of the present invention without deviating from the purpose of the present invention.

## Claims

1. A method for issuing and managing a currency, comprising the following steps: selecting a planet corresponding to a currency; dividing a surface area of the planet equally according to a determined unit area; determining a total amount of currency issuance according to the number of divided unit areas of the planet; anchoring each unit area of the planet, and performing currency issuance in a manner that each unit area corresponds to one currency issuance unit.

2. The method for issuing and managing the currency according to claim 1, wherein the planet is the earth, the unit area is one square meter, a surface area of the earth is 510.1 trillion square meters, and a total amount of currency issuance is 510.1 trillion coins.

3. The method for issuing and managing the currency according to claim 2, wherein the currency is a physical currency, an electronic currency, or both a physical currency and an electronic currency.

4. The method for issuing and managing the currency according to claim 2, wherein each currency issuance unit corresponds to a plain code, and the plain code is longitude and latitude coordinates of the unit area of the earth corresponding to the currency issuance unit.

5. The method for issuing and managing the currency according to claim 4, wherein the currency is classified into a water currency, a gold currency, an earth currency, a fire currency, and a wood currency according to a state of the unit area of the earth corresponding to each currency issuance unit.

6. A system for issuing and managing a currency, wherein the system comprises an issuing authority, which selects a planet corresponding to a currency; divides a surface area of the planet equally according to a determined unit area; determines a total amount of currency issuance according to the number of divided unit areas of the planet; anchors each unit area of the planet, and performs currency issuance in a manner that each unit area corresponds to one currency issuance unit.

7. The system for issuing and managing the currency according to claim 6, wherein the planet is the earth, the unit area is one square meter, a surface area of the earth is 510.1 trillion square meters, and a total amount of currency issuance is 510.1 trillion coins.

8. The system for issuing and managing the currency according to claim 7, wherein the currency is a physical currency, an electronic currency, or both a physical currency and an electronic currency, and the system further comprises a trading authority that provides a trading platform to provide a service for a transaction between currency holders.

9. The system for issuing and managing the currency according to claim 6, wherein each currency issuance unit corresponds to a plain code, and the plain code is longitude and latitude coordinates of the unit area of the earth corresponding to the currency issuance unit.

10. The system for issuing and managing the currency according to claim 9, wherein the currency comprises a water currency, a gold currency, an earth currency, a fire currency, and a wood currency, and each type of currency is determined according to a state of the unit area of the earth corresponding to each currency issuance unit.
